# EUROPÄISCHE PATENTSCHRIFT

(11) **EP 0 449 852 B1**
(45) Veröffentlichungstag und Bekanntmachung des Hinweises auf die Patenterteilung: **01.09.1993**
(21) Anmeldenummer: 89913189.0
(22) Anmeldetag: 07.12.1989
(51) Int. Cl.: H01F 7/18, H01H 47/02, F02D 41/22

(54) **VERFAHREN UND VORRICHTUNG ZUR STEUERUNG UND ERFASSUNG DER BEWEGUNG EINES ANKERS EINES ELEKTROMAGNETISCHEN SCHALTORGANS**
PROCESS AND DEVICE FOR CONTROLLING AND DETECTING THE MOVEMENT OF AN ARMATURE OF AN ELECTROMAGNETIC SWITCHING DEVICE
PROCEDE ET DISPOSITIF DE COMMANDE ET DE DETECTION DU MOUVEMENT DE L'INDUIT D'UN ORGANE DE COMMUTATION ELECTROMAGNETIQUE

(30) Priorität: 22.12.1988 DE 3843138
(43) Veröffentlichungstag der Anmeldung: 09.10.1991
(73) Patentinhaber: ROBERT BOSCH GMBH, 70442 Stuttgart (DE)
(72) Erfinder: LOCHER, Johannes, D-7000 Stuttgart (DE); SIEBERT, Hans-Joachim, 7141 Schwieberdingen (DE); GRAF, Herbert, D-7257 Ditzingen (DE); RODRIQUEZ-AMAYA, Nestor, D-70 Stuttgart 50 (DE); KARLE, Anton, D-7250 Leonstrasse 6 (DE); SCHMITT, Alfred, D-7257 Ditzingen 4 (DE); TAUSCHER, Joachim, D-7000 Stuttgart 1 (DE); ZIMMERMANN, Werner, D-7016 Gerlingen (DE); BUISSON, Dominique, F-69200 Vénissieux (FR); HEHN, Lucien, F-69100 Villeurbanne (FR); LAUVIN, Pierre, F-69340 Francheville (FR); PAGANON, Henri, F-69631 Vénissieux (FR)
(86) Internationale Anmeldenummer: DE8900758
(87) Internationale Veröffentlichungsnummer: WO9007188

(56) Entgegenhaltungen:
- WO-A-36/15908
- WO-A-87/05662
- WO-A-80/2544
- DD-A- 257 662
- DE-A- 3 611 220
- DE-C- 2 251 472

## Beschreibung

### Vorrichtung und Verfahren zur Steuerung eines eine Erregerwicklung und einen bewegbaren Anker aufweisenden elektromagnetischen Schaltorgans

Die Erfindung geht aus von einer Vorrichtung zur Steuerung eines eine Erregerwicklung und einen bewegbaren Anker aufweisenden elektromagnetischen Schaltorgans nach dem ersten Teil des Anspruchs 1, sowie von einem entsprechenden Verfahren nach dem ersten Teil des Anspruchs 6.

Aus der DE-PS 22 51 472 ist ein Verfahren bekannt, bei dem die mechanische Bewegung eines Magnetventilankers durch die Messung des durch die Magnetwicklung fließenden Stroms kontrolliert wird, insbesondere dadurch, daß die zeitlichen Änderungen des Stromanstiegs erfaßt werden.

Dieses Verfahren hat den Nachteil, daß Störungen in der Spannungsversorgung, die zu zeitlichen Änderungen des durch die Magnet- bzw. Erregerwicklung fließenden Stroms führen, als Hinweis auf die Bewegung des Magnetankers fehlgedeutet werden. Auf diese Weise ist also eine sichere Überwachung der Bewegung eines Magnetventilankers ausgeschlossen.

Bei einer aus der DE-PS 22 51 472 bekannten Vorrichtung findet eine Erfassung der zeitlichen Änderungen des an die Erregerwicklung angelegten Stroms während eines Zeitraumes statt, der von Beginn der Ansteuerung des Ankers bis über das Ende von dessen Bewegung hinaus reicht. Deshalb muß sichergestellt sein, daß in dieser Überwachungsphase keine durch äußere Einflüsse hervorgerufenen zeitlichen Änderungen des Stromverlaufs stattfinden, aus denen auf eine Bewegung des Ankers rückgeschlossen werden könnte. Dadurch werden die Ansteuerungsmöglichkeiten des zugehörigen Magnetventils beschränkt.

Aus WO 87/05662 sind ein Verfahren und eine Schaltungsanordnung zur Steuerung der Entregungszeit von elektromagnetischen Einrichtungen, insbesondere von elektromagnetischen Ventilen bei Brennkraftmaschinen, bekannt, bei denen der Erregungsstrom ausgehend von einem hohen Haltestromwert für eine bestimmte Zeitdauer nicht auf Null oder sogar einen negativen Wert, sondern auf einen im positiven Bereich unterhalb des Haltestroms liegenden Wert abgesenkt wird. Aufgrund der dadurch im Erregungskreis entstehenden charakteristischen Strom- und/oder Spannungswerte können Öffnungsanfang und Öffnungsende der Ventilnadel des elektromagnetischen Ventils besonders genau ermittelt und für eine optimale Beeinflussung der Arbeitsweise der Brennkraftmaschine berücksichtigt werden.

Aus WO 88/02544 ist weiterhin eine Schaltungsanordnung bekannt, bei der ein Monoflop nur zur Begrenzung der Zeitdauer dient, in der die volle Erregerspannung an einer Elektromagnetspule anliegt.

### Vorteile der Erfindung

Die Vorrichtung mit den in Anspruch 1 genannten Merkmalen hat demgegenüber den Vorteil, daß die Bewegung des Ankers eines elektromagnetischen Schaltorgans unabhängig von Schwankungen der, Energieversorgung sicher erkannt werden kann. Besonders vorteilhaft ist es, daß die zur Erzeugung der Be wegung des Ankers nötige Energie zu Beginn eines Schaltvorgangs für kurze Zeit sehr hoch sein kann, um die Bewegung des Ankers zu beschleunigen. Sobald sich der Anker bewegt, wird die Energie so weit gesenkt, daß der Anker in seiner betätigten Stellung, in der Einschaltstellung, verbleibt.

Entsprechend wird bei der Abschaltung des elektromagnetischen Schaltorgans die Energie, die den Anker in seiner betätigten Stellung, der Einschaltstellung, hält, sehr rasch auf null oder auch auf einen negativen Wert gesenkt. Dadurch wirken starke Beschleunigungskräfte auf den Anker. Sobald sich dieser bewegt, wird die Energie wieder auf einen Wert angehoben, die unterhalb der Halteenergie liegt, die nötig ist, um den Anker in seiner betätigten Stellung zu halten. Dadurch bewegt sich der Anker sehr rasch in die Ausschaltstellung. Durch die Anhebung der Energie auf einen definierten Wert unterhalb der Halteenergie wird ein Magnetfeld induziert, dessen auf der Bewegung des Ankers bzw. auf dem Ende der Bewegung des Ankers beruhende Änderung erfaßt werden kann.

Besonders bevorzugt wird ein Verfahren, bei dem die rasche Anhebung der Energie auf ein hohes Niveau beim Einschaltvorgang bzw. die rasche Absenkung der Energie auf ein niedriges Niveau beim Ausschaltvorgang nur so lange aufrechterhalten wird, bis eine Bewegung des Ankers stattfindet. Da die unmittelbare Erfassung der Ankerbewegung sehr aufwendig ist, wird der definierte Wert der Energie nach einer Zeit Tₒ eingestellt, nach der mit Sicherheit eine Bewegung des Ankers stattfindet. Die Zeit wird allerdings kleiner gewählt als die Zeit, die bis zur Erreichung des Einschaltzustands bzw. des Ausschaltzustands verstreicht. Auf diese Weise wird eine starke Beschleunigung des Ankers erreicht.

Bei einem bevorzugten Verfahren wird der definierte Wert der Energie wenigsten bis zum Ende der Ankerbewegung in etwa konstant gehalten. Dadurch kann die Bewegung des Ankers besonders einfach überwacht werden.

Schließlich wird bei einem besonders bevorzugten Verfahren die Änderung des Stroms oder der Spannung an der Erregerwicklung in einem Zeitintervall erfaßt, das vor dem Ende der Bewegung beginnt und nach dem Ende der Bewegung endet. Auf diese Weise wird eine Filterfunktion erreicht, die sicherstellt, daß durch äußere Einflüsse hervorgerufene Strom- bzw. Spannungsänderungen nicht fehlgedeutet werden.

Die erfindungsgemäße Vorrichtung insbesondere zur Durchführung eines Verfahrens der oben genannten Art mit den in Anspruch 13 genannten Merkmalen hat gegenüber bekannten Vorrichtungen den Vorteil, daß zeitliche Änderungen des Strom- bzw. Spannungsverlaufs unmittelbar nach dem Ein- bzw. Ausschaltvorgang nicht erfaßt werden. Daher ist es möglich, beim Einschalten des elektromagnetischen Schaltorgans die zur Bewegung des Ankers notwendige Energie für kurze Zeit sehr hoch einzustellen und nach Beginn der Bewegung des Ankers abzusenken. Entsprechend ist es möglich, nach dem Abschalten des elektromagnetischen Schaltorgans die an der Erregerwicklung anliegende Energie sehr rasch zu senken. Die beim Ein- und Ausschalten auftretenden zeitlichen Änderungen werden bei dieser Vorrichtung nicht als Bewegungen des Ankers fehlgedeutet.

Durch die in den Unteransprüchen aufgeführten Maßnahmen sind vorteilhafte Weiterbildungen und Verbesserungen des in Anspruch 1 angegebenen Verfahrens und der in Anspruch 13 genannten Vorrichtung möglich.

### Zeichnung

Die Erfindung wird im folgenden anhand der Zeichnung näher erläutert.Es zeigen:
Figur 1 ein Prinzipschaltbild einer Steuerung eines elektromagnetischen Schaltorgans;
Figur 2 ein dem Schaltbild gemäß Figur 1 zugeordnetes Schaltdiagramm;
Figur 3 ein Blockschaltbild einer erfindungsgemäßen Vorrichtung;
Figur 4 ein Diagramm des zeitlichen Verlaufes verschiedener Signale in der Vorrichtung gemäß Figur 3 während eines Einschaltvorgangs;
Figur 5 ein weiteres Diagramm des zeitlichen Verlaufs verschiedener Signale der Schaltung gemäß Figur 3 während des Einschaltvorgangs und
Figur 6 den zeitlichen Verlauf verschiedener Signale der Schaltung gemäß Figur 3 während eines Ausschaltvorgangs.

### Beschreibung der Ausführungsbeispiele

Verfahren und Vorrichtung gemäß der Erfindung sind zur Steuerung und Erfassung der Bewegung eines Ankers eines beliebigen elektromagnetischen Schaltorgans geeignet. Vorzugsweise lassen sich Verfahren und Vorrichtung der im folgenden beschriebenen Art einsetzen bei der Steuerung und Erfassung der Bewegung eines Magnetankers eines Magnetventils, das zur Steuerung einer Einspritzpumpe eines Dieselmotors verwendet wird. Es ist aber auch möglich, die Bewegung eines Ankers eines Magnetventils zu überwachen, das beispielsweise für eine Antiblockiereinrichtung eines Bremssystems verwendet wird.

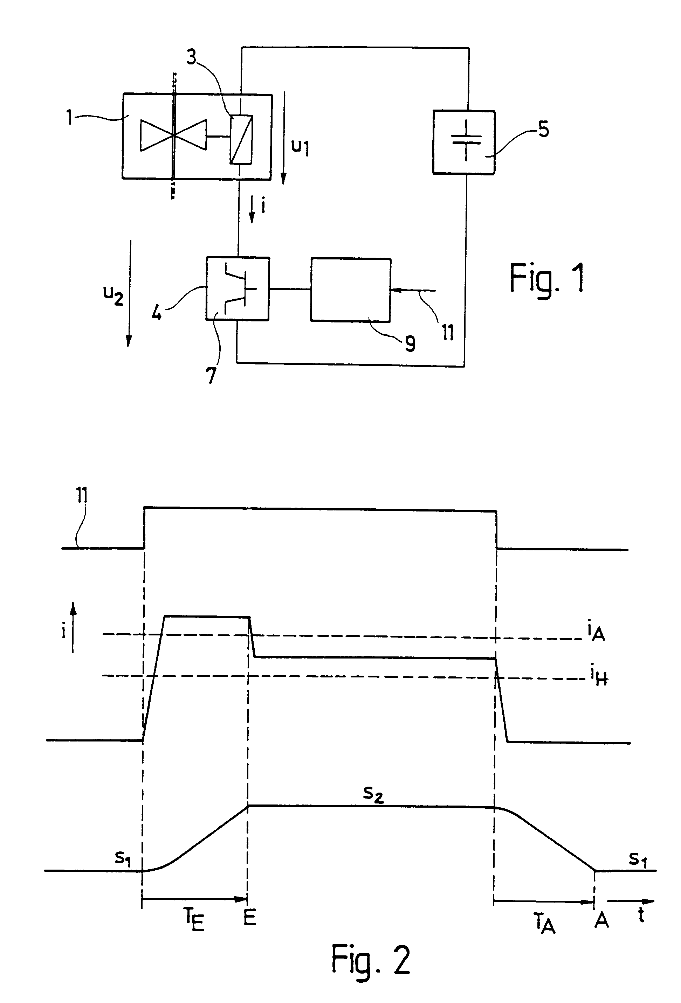

In Figur 1 ist beispielhaft ein Magnetventil 1 dargestellt, das zur Steuerung einer in der Figur nicht dargestellten Einspritzpumpe eines Dieselmotors verwendet wird. Die Erregerwicklung 3 des Magnetventils liegt in Reihe mit einer Spannungsquelle 5 und mit mindestens einem steuerbaren Schalter bzw. einem elektrisch oder elektronisch steuerbaren Ventil 7, beispielsweise einem Transistor, der von einer Steuer- und Regeleinheit 9 entsprechend einem Steuersignal 11 angesteuert wird. Die an der Erregerwicklung 3 abfallende Spannung wird mit u1 bezeichnet und die Spannung am Ventil 7 mit u2.

Figur 2 zeigt einen möglichen zeitlichen Verlauf des Steuersignals 11, des durch die Erregerwicklung 3 fließenden Stroms i und den zeitlichen Verlauf der Bewegung des Ankers des Magnetventils 1. Dieser kann aus einer unbetätigten Stellung S1 in eine betätigte Stellung S2 gebracht werden.

Die Bewegung des Magnetankers aus der Stellung S1 in die Stellung S2 wird als Einschaltvorgang bezeichnet. Die bis zur Erreichung der Einschaltstellung S2 verstreichende Zeit wird mit T_{E} bezeichnet, der Einschaltzeitpunkt mit E. Entsprechend wird die Bewegung des Magnetankers aus der Stellung S2 in die Stellung S1 als Ausschaltvorgang bezeichnet. Die Ausschaltzeit wird mit T_{A} bezeichnet, der Ausschaltzeitpunkt mit A.

Das Magnetventil wird hier durch ein rechteckförmiges Steuersignal angesteuert. Wenn das Steuersignal 11 eingeschaltet wird, erhöht sich der Strom i über einen als Anzugsstrom ⁱA bezeichneten ersten Wert hinaus. Der Anzugsstrom ist erforderlich, um das Magnetventil aus seiner abgeschalteten Stellung S1 in die betätigte Stellung S2 zu bringen.

Nach Ablauf der Einschaltzeit T_{E} wird der durch die Erregerwicklung 3 fließende Strom i auf einen unterhalb des Anzugsstroms liegenden Wert gesenkt. Er ist hier höher als der Haltestrom ⁱH, der mindestens erforderlich ist, den Magnetanker des Magnetventils in seiner betätigten Stellung S2 zu halten.

Wenn das Magnetventil 1 abgeschaltet werden soll, wird das Steuersignal 11 auf seinen Ausgangswert gesenkt. Gleichzeitig wird der durch die Erregerwicklung 3 fließende Strom i ebenfalls auf den Ausgangswert, beispielsweise auf Null gesenkt. Dadurch bewegt sich der Anker des Magnetventils aus der betätigten Stellung S2 in die unbetätigte Stellung S1. Nach Ablauf der Ausschaltzeit T_{A} hat der Anker die Ausschaltstellung S1 erreicht.

Die Ein- und Ausschaltzeiten T_{A} und T_{E} und damit der Einschaltzeitpunkt E und der Ausschaltzeitpunkt A sind von einer Reihe von Parametern, beispielsweise von Fertigungstoleranzen, dem Zustand der Spannungsquelle oder der Höhe und Änderungsgeschwindigkeit des Stroms i abhängig und unterliegen daher erheblichen Streuungen. Daraus ergeben sich bei einer Kraftstoff-Einspritzung unerwünschte Abweichungen der Einspritzzeit und der Einspritzmenge.

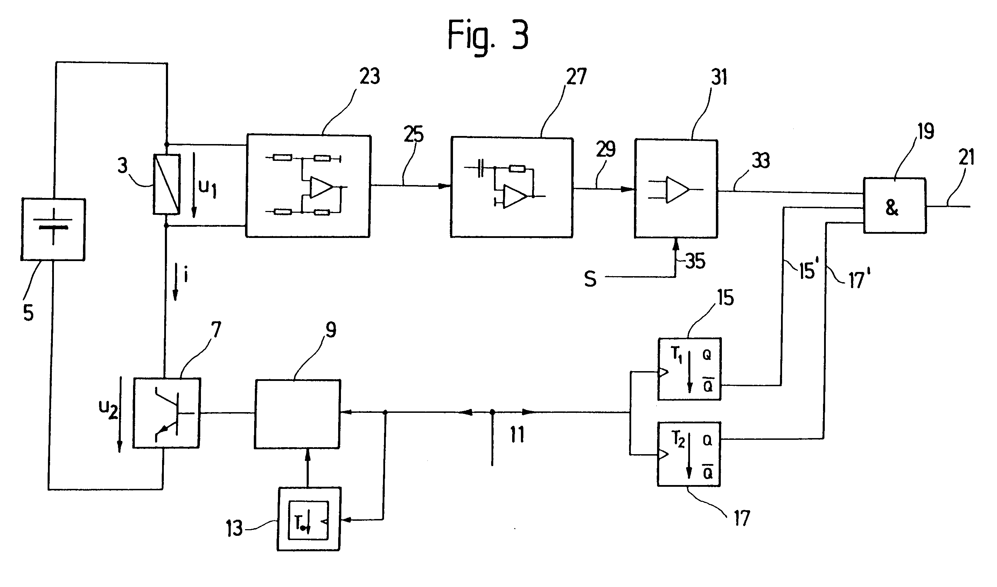

Figur 3 zeigt eine Schaltungsanordnung, mit der die Bewegung des Ankers eines elektromagnetischen Schaltorgans gesteuert und erfaßt werden kann. Als Schaltorgan ist hier wieder beispielhaft ein Magnetventil gewählt, von dem hier lediglich die Erregerwicklung 3 dargestellt ist. Diese liegt in Reihe zu einer Spannungsquelle 5, beispielsweise einer Batterie, und zu einem steuerbaren Schalter bzw. elektronisch steuerbaren Ventil 7, beispielsweise einem Transistor. Die an der Erregerwicklung 3 abfallende Spannung wird mit u1, die Spannung am Ventil 7 mit u2 und der in der Reihenschaltung fließende Strom mit i bezeichnet. Das steuerbare Ventil wird von einer Steuer- und Regeleinheit 9 angesteuert, der ein Steuersignal 11 zugeführt wird. Der Steuer- und Regeleinheit 9 ist ein Zeitgeber bzw. ein Zeitglied 13, das beispielsweise als Monoflop ausgelegt ist, zugeordnet. Der Steuer- und Regeleinrichtung 9 können zusätzlich in Figur 3 nicht dargestellte Meßsignale für den Strom i oder die Spannungen U₁ bzw. U₂ zugeführt werden.

Das Steuersignal 11 wird auch einem ersten Zeitgeber 15 sowie einem zweiten Zeitgeber 17 einer Torschaltung zugeleitet. Als Zeitgeber werden hier beispielsweise Kippschaltungen verwendet, wobei hier der invertierende Ausgang des ersten Zeitgebers 17 und der nicht-invertierende Ausgang des zweiten Zeitgebers 18 mit einem UND-Gatter 19 verbunden ist. Das Ausgangssignal des UND-Gatters ist hier mit 21 bezeichnet.

Parallel zur Erregerwicklung 3 ist eine Meßeinrichtung 23, beispielsweise ein Differenzverstärker geschaltet. Das Ausgangssignal der Meßeinrichtung 23 wird über eine Leitung 25 einer Differenzierschaltung 27 zugeleitet, die z.B. einen auf übliche Weise beschalteten Operationsverstärker enthält. Die Differenzierschaltung 27 ist über eine Leitung 29 mit einem als Vergleicherschaltung dienenden Schwellwertschalter 31 verbunden, dessen Ausgangssignal über eine Leitung 33 dem UND-Gatter 19 zugeführt wird. Dem Schwellwertschalter 31 wird über eine Leitung 35 ein Schwellwert S zugeführt.

Die Schaltung nach Figur 3 kann abgewandelt werden, indem die der Erregerwicklung 3 parallelgeschaltete Meßeinrichtung 23 für die Spannung U₁ durch eine Meßeinrichtung für den Strom 1, beispielsweise ein Shunt in Reihe zur Erregerwicklung 3, ersetzt wird, deren Ausgangssignal ebenfalls der Differenzierschaltung 27 zugeleitet wird.

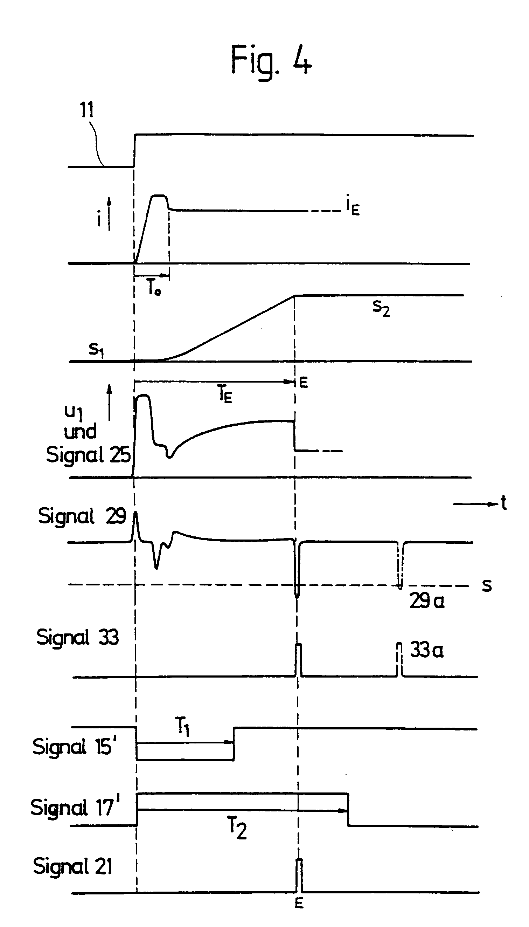

Die Funktion der in Figur 3 dargestellten Schaltung und die zeitlichen Verläufe der Potentiale in verschiedenen Leitungen der Anordnung sollen zunächst anhand eines Einschaltvorgangs erläutert werden. Die zeitliche Änderung der Potentiale ist dazu in Figur 4 dargestellt.

Ganz oben in dem Diagramm ist der zeitliche Verlauf des Steuersignals 11 dargestellt. Aufgrund dieses Signals wird der steuerbare Schalter 7 von der Steuer- und Regeleinheit 9 angesteuert, so daß sich der in Figur 4 dargestellte Verlauf des Stroms i ergibt. Der Strom durch die Erregerspule steigt zunächst sehr rasch auf einen Wert an, der durch die Spannung der Spannungsversorgung 5 und durch den Innenwiderstand der Erregerwicklung 3 sowie durch den Innenwiderstand des steuerbaren Schalters 7 gegeben ist. Nach einer Zeit Tₒ wird der steuerbare Schalter bzw. das Ventil 7 durch die Steuer- und Regeleinheit 9 so angesteuert, daß sich ein definierter Wert, der Einschaltkonstantstrom ⁱE ergibt. Durch den Zeitgeber 13 wird die Zeit Tₒ vorgegeben. Der Zeitgeber wird mit dem Steuersignal 11 beaufschlagt, und beeinflußt die Steuer- und Regeleinheit 9 so, daß der Strom i durch die Erregerwicklung 3 zunächst nicht beeinflußt wird und auf einen maximalen Wert steigt. Nach der Totzeit Tₒ wird die Steuer- und Regeleinheit 9 aktiviert.

Der Zeitgeber 13 ist so dimensioniert, daß die vorgegebene Totzeit Tₒ kleiner ist als die Einschaltzeit T_{E} des elektromagnetischen Schaltorgans bzw. des Magnetventils.

Die Totzeit Tₒ ist so gewählt, daß der durch die Erregerspule 3 fließende Strom i erst gesenkt wird, wenn der Anker der Erregerwicklung in Bewegung gekommen ist. Dies ist ebenfalls aus Figur 4 ersichtlich. Nach der Zeit Tₒ hat sich der Anker aus einer Grundstellung S1 herausbewegt in Richtung auf eine betätigte Stellung S2. Die Bewegung des Ankers ist zum Einschaltzeitpunkt E, also nach Ablauf der Einschaltzeit T_{E}, abgeschlossen. Zu diesem Zeitpunkt hat der Magnetanker die betätigte Stellung S2 erreicht.

In dem vierten Diagramm von oben in Figur 4 sind der zeitliche Verlauf der an der Erregerwicklung 3 abfallenden Spannung u1 sowie das Potential der Leitung 25, also das Ausgangssignal der Meßeinrichtung 23 dargestellt.

Die Spannung u1 an der Erregerwicklung 3 steigt, ebenso wie das Ausgangssignal der Meßeinrichtung 23, sehr rasch an. Aus dem Diagramm ist erkennbar, daß die Spannung u1 aufgrund der Bewegung des Ankers, aber auch durch die Reduktion des Stroms i zunächst abfällt und dann langsam wieder ansteigt. Sobald der Anker die betätigte Stellung S2 erreicht hat, also die Bewegung des Ankers endet, fällt die Spannung u1 an der Erregerwicklung 3 und damit am Ausgang der Meßeinrichtung 23 schlagartig ab.

In dem fünften Diagramm von oben ist in Figur 4 der Potentialverlauf am Ausgang der Differenzierschaltung 27, also das Signal auf der Leitung 29 dargestellt.

Es handelt sich hierbei um die zeitliche Ableitung des Signals auf der Leitung 25. Besonders deutlich ist die am Ausgang der Differenzierschaltung 27 auftretende Spannungsspitze, die bei Beendigung der Ankerbewegung zum Einschaltzeitpunkt E auftritt.

Aufgrund dieser Spannungsspitze kann das Ende der Bewegung des Ankers ermittelt werden. Dazu wird das Signal auf der Leitung 29, das Ausgangssignal der Differenzierschaltung 27, dem Schwellwertschalter 31 zugeführt. Dieser vergleicht das Ausgangssignal der Differenzierschaltung mit dem eingegebenen Schwellwert S. Sobald das Signal auf der Leitung 29 den Schwellwert S unterschreitet, erscheint am Ausgang 33 des Schwellwertschalters 31 ein Signal, wie dies in Figur 4 dargestellt ist. Der Schwellwert S wird so gewählt, daß der Schwellwertschalter 31 nicht auf kleinere Störsignale reagiert. Im Ausgangssignal 33 des Schwellwertschalters tritt somit zum Einschaltzeitpunkt E ein Impuls auf.

Aufgrund eines Störsignals, z.B. in der Energieversorgung, kann das Ausgangssignal 29 der Differenzierschaltung 27 auch unerwünschte Spannungsspitzen 29a aufweisen, die den Schwellwert S unterschreiten. In einem solchen Fall würde an der Ausgangsleitung 33 des Schwellwertschalters 31 ein Ausgangssignal 33a auftreten, welches als Ende der Bewegung des Ankers gedeutet würde.

Um Fehlinterpretationen dieser Art zu vermeiden, ist eine Torschaltung vorgesehen, mit deren Hilfe eine Auswertung der Ausgangssignale 33 nur innerhalb bestimmter Zeiträume ermöglicht wird. Dazu sind ein erster Zeitgeber 15 sowie ein zweiter Zeitgeber 17 vorgesehen, deren Ausgangssignale 15 und 17' einer Auswertungsschaltung zugeleitet werden, die hier als UND-Gatter 19 ausgelegt ist. Dieses ist auch mit dem Ausgang 33 des Schwellwertschalters 31 verbunden.

Der erste Zeitgeber ist so ausgelegt, daß während einer Zeit T₁ ein Signal an seinem invertierenden Ausgang anliegt. Während der Zeit T₁ liegt also ein von dem ersten Zeitgeber 15 abgegebener negativer Impuls an der Auswertungsschaltung bzw. an dem UND-Gatter 19 an.

Der zweite Zeitgeber ist so ausgelegt, daß ein positiver Impuls während einer Zeit T₂ an seinem nicht invertierenden Ausgang 17' anliegt.

Durch die Torschaltung und die Auswertungsschaltung ist gewährleistet, daß das Ausgangssignal 33 des Schwellwertschalters 31 nur dann weitergeleitet wird, d.h. am Ausgang 21 des UND-Gatters 19 erscheint, wenn erstens das negative Signal des ersten Zeitgebers 15 nicht mehr vorhanden ist und wenn das positive Signal des zweiten Zeitgebers 17 an der Auswertungsschaltung anliegt. Das Ausgangssignal des Schwellwertschalters kann also nur nach Ablauf der Zeit T₁ und vor Ablauf der Zeit T₂ weitergeleitet werden.

Die Zeiten T₁ und T₂ sind so gewählt, daß das Ausgangssignal des Schwellwertschalters nur in einem Zeitraum weitergeleitet und damit ausgewertet wird, der vor dem Einschaltzeitpunkt E beginnt und nach diesem Zeitpunkt endet.

Der Verlauf der Signale an den Ausgängen der Zeitgeber 15 und 17 ist in Figur 4 dargestellt. Ebenso ist dort das Ausgangssignal 21 der Auswertungsschaltung wiedergegeben. Es ist erkennbar, daß lediglich am Ende der Bewegung des Ankers ein Signal auf der Leitung 21 erscheint. Außerhalb des von der Totzeitschaltung vorgegebenen Zeitrahmens können aufgrund von Spannungsschwankungen auftretende Fehlersignale die Auswertungsschaltung nicht passieren. Fehlersignale werden also ausgefiltert. Auf diese Weise kann das Bewegungsende des Ankers mit sehr hoher Sicherheit ermittelt werden.

Wenn die Ankerrückwirkung so schwach ist, daß die beim Bewegungsende auftretende Signalspitze nicht sicher erkannt werden kann, so ist es vorteilhaft, zwischen der Differenzierschaltung 27 und dem Schwellwertschalter 31 weitere in Reihe geschaltete Differenzierschaltungen vorzusehen.

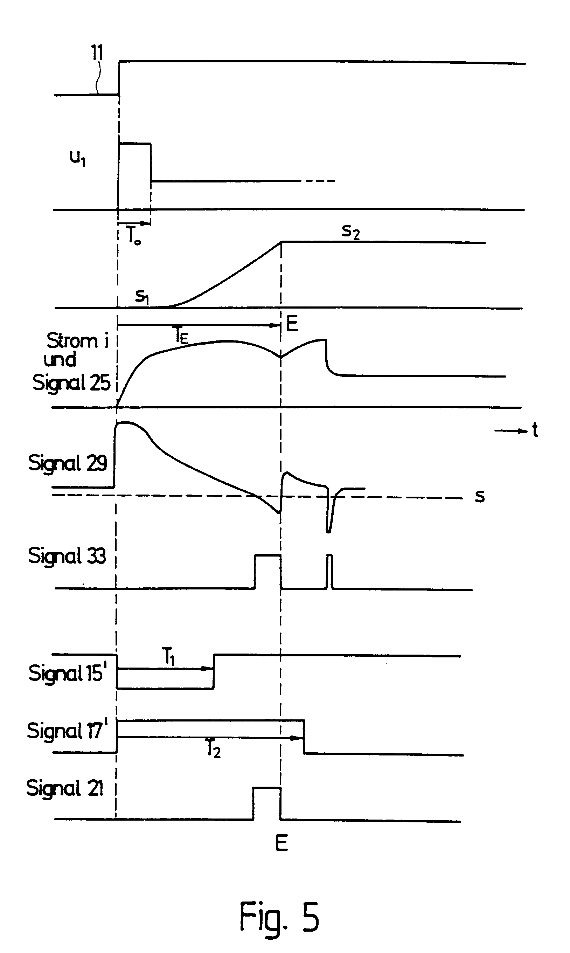

Während anhand von Figur 4 die Stromansteuerung eines elektromagnetischen Steuerorgans beschrieben wurde, wird anhand von Figur 5 die Spannungsansteuerung eines solchen Schaltorgans während des Einschaltvorgangs erläutert. Hierzu wird, wie bereits oben beschrieben, die Meßeinrichtung 23 für die Spannung U₁ durch eine Meßeinrichtung für den Strom i ersetzt, deren Ausgangssignal ebenfalls der Differenzierschaltung 27 zugeführt wird.

In dem ersten Diagramm ist der zeitliche Verlauf des Steuersignals 11 dargestellt. Das zweite Diagramm gemäß Figur 5 zeigt den zeitlichen Verlauf der an der Erregerwicklung 3 anliegenden Spannung u1. Auch hier wird nach einer von dem Zeitgeber 13 vorgegebenen Zeit Tₒ eine Reduktion der Versorgungsenergie vorgenommen, d.h. die Spannung wird auf die Einschaltkonstantspannung reduziert. Diese Energie reicht aus, den Anker des Schaltorgans in der betätigten Stellung zu halten. Zunächst wird die Spannung, wie bei der Stromansteuerung, auf einen maximalen Wert angehoben, der von der Spannungsversorgung und den an der Spannungsquelle liegenden Verbrauchern bestimmt wird. Sobald der Magnetanker in Bewegung gekommen ist und die nicht betätigte Stellung S1 verlassen hat, wird die Spannung abgesenkt. Da eine direkte Erfassung des Beginns der Ankerbewegung schwerlich möglich ist, wird die Spannung u1 nach einer Zeit Tₒ abgesenkt, nach der mit Sicherheit eine Bewegung des Ankers erfolgt. Diese Zeit wird jedoch so gewählt, daß sie kleiner ist als die Einschaltzeit T_{E}.

Der Verlauf der Bewegung des Ankers ist in dem dritten Diagramm gemäß Figur 5 dargestellt. Es ist deutlich, daß der Anker nach Ablauf der Einschaltzeit T_{E} bzw. zum Einschaltzeitpunkt E die betätigte Stellung S2 erreicht hat.

Das vierte Diagramm in Figur 5 zeigt den zeitlichen Verlauf des durch die Erregerwicklung 3 fließenden Stroms i und den Verlauf des Signals am Ausgang 25 der Meßeinrichtung 23. Aus dem zeitlichen Verlauf des durch die Erregerwicklung fließenden Stroms i und des Signals auf der Leitung 25 ist ersichtlich, daß zunächst ein steiler Anstieg des Stroms erfolgt. Sobald der Anker in Bewegung kommt, ist der Anstieg aufgrund der auf dem Magnetfeld beruhenden Rückwirkung wesentlich geringer. Wenn nach Ablauf der Einschaltzeit T_{E} der Anker zur Ruhe kommt, d.h. nach dem Einschaltzeitpunkt E, steigt der Strom wieder an.

Nachdem der Anker die betätigte Stellung S2 erreicht hat, kann der Strom i durch die Erregerwicklung 3 auf einen Wert gesenkt werden, der ausreicht, den Anker in der betätigten Stellung S2 zu halten. Dieser Stromwert ist vorzugsweise nur wenig größer als der Haltestrom.

Das nächste Diagramm in Figur 5 zeigt die zeitliche Ableitung des Ausgangssignals 25 der Meßeinrichtung 23. Diese Ableitung wird mit Hilfe des Differenzierglieds 27 durchgeführt. Aus dem Kurvenlauf ist ersichtlich, daß bei Erreichen des Einschaltzustands S2 zum Zeitpunkt E die zeitliche Ableitung ihre Größe schlagartig ändert. Kurz vor diesem Zeitpunkt unterschreitet die zeitliche Ableitung einen Schwellwert S, so daß am Ausgang 33 des Schwellwertschalters 31 ein Signal erscheint.

Der Schwellwert S des Schwellwertschalters 31 wird so gewählt, daß der Schwellwert während der Bewegung des Ankers unterschritten und nach dem abrupten Ende der Ankerbewegung zum Einschaltzeitpunkt E wieder überschritten wird. Im Ausgangssignal des Schwellwertschalters 31 tritt somit zum Zeitpunkt E ein Flankenwechsel auf.

Das Ende der Ankerbewegung ist dann besonders sicher erkennbar, wenn die Einschaltkonstantspannung so gewählt wird, daß der Strom i während der Ankerbewegung abnimmt und nach deren Ende wieder zunimmt. In diesem Fall wechselt die zeitliche Ableitung des Stroms i und damit das dem Schwellwertschalter 31 zugeführte Signal zum Zeitpunkt E das Vorzeichen.

Wenn der durch die Erregerwicklung 3 fließende Strom i auf einen Wert gesenkt wird, der nur wenig größer ist als der Haltestrom, überschreitet das Signal 29 am Ausgang der Differenzierschaltung 27 wiederum den Schwellwert S. Dies führt bei der Auswertung des Signals dazu, daß mehrere Flankenwechsel vorhanden sind, die als Ende der Ankerbewegung gedeutet werden können. Um Fehlinterpretationen zu vermeiden, ist die oben beschriebene Torschaltung vorgesehen, die die Auswertung des Ausgangssignals des Schwellwertschalters 31 auf einen Zeitraum begrenzt, der kurz vor Erreichen des Einschaltzeitpunkts E beginnt und kurz danach endet. Dies wird dadurch erreicht, daß die Zeitkonstante T₁ des ersten Zeitgebers 15 der Torschaltung kleiner ist als die Einschaltzeit T_{E} und daß die Zeitkonstante T₂ des zweiten Zeitgebers 17 größer ist als die Einschaltzeit T_{E}.

Der Verlauf der Signale der Zeitgeber 17 und 15 ist ebenfalls in Figur 5 dargestellt. Insofern wird jedoch auf die Beschreibung zu Figur 4 verwiesen.

Das Ausgangssignal 21 der Signalauswertungsschaltung 19, die auch hier als UND-Gatter ausgelegt ist, ist als letztes Diagramm in Figur 5 dargestellt. Es zeigt sich, daß lediglich ein Signal auftritt, wenn der Anker zur Ruhe kommt, und daß andere Signale ausgefiltert sind.

Wenn bei sehr schwacher Ankerrückwirkung die beim Bewegungsende auftretende Spannungsspitze nicht sicher erkannt werden kann, so können zwischen der Differenzierschaltung 27 und dem Schwellwertschalter 31 weitere in Reihe geschaltete Differenzierschaltungen vorgesehen werden.

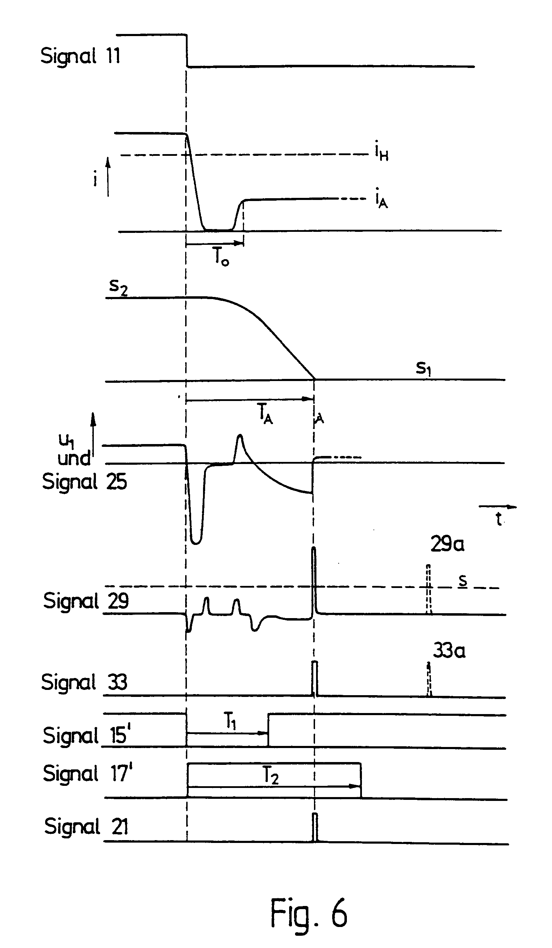

Figur 6 zeigt den zeitlichen Verlauf der Signale in einer Schaltung gemäß Figur 3 bei einem Ausschaltvorgang.

In dem obersten Diagramm von Figur 6 ist der zeitliche Verlauf des Steuersignals 11 dargestellt. Aufgrund des Abfalls des Steuersignals wird der steuerbare Schalter 7 von der Steuer- und Regeleinheit 9 so angesteuert, daß der Strom i durch die Erregerwicklung 3 des elektromagnetischen Schaltorgans bzw. des Magnetventils sehr rasch abfällt. Bei der Darstellung in Figur 6 fällt der Strom i auf den Wert 0 ab. Es ist jedoch auch möglich, daß hier mit einer geeigneten Schaltung negative Stromwerte eingestellt werden. Sobald der Strom i den Haltestrom ⁱH unterschreitet, verläßt der Anker des elektromagnetischen Schaltorgans die betätigte Stellung S2 und bewegt sich in die unbetätigte Stellung S1. Nach einer Zeit Tₒ wird der Strom auf einen Wert unterhalb des Haltestroms angehoben, nämlich auf den Ausschaltkonstantstrom ⁱA. Durch die rasche Absenkung des Stroms i erfolgt eine hohe Beschleunigung des Ankers. Die Zeit Tₒ wird durch den Zeitgeber 13 eingestellt. Die Zeit Tₒ ist so gewählt, daß der Strom erst wieder angehoben wird, wenn der Anker in Bewegung geraten ist. Auch hier wird die Zeitspanne Tₒ beispielsweise durch Versuche ermittelt und so gewählt, daß die Anhebung des Stroms vor Ablauf der Ausschaltzeit T_{A}, das heißt vor Erreichen des Ausschaltzeitpunkts A erfolgt.

Die Bewegung des Ankers ist ebenfalls in Figur 6 dargestellt. Er bewegt sich aus der betätigten Stellung S2 innerhalb der Ausschaltzeit T_{A} in die unbetätigte Stellung S1. Die Bewegung des Schalters endet zum Ausschaltzeitpunkt A.

Der zeitliche Verlauf der Spannung u1 an der Erregerwicklung 3 und des Ausgangssignals 25 der Messeinrichtung 23 sind ebenfalls in Figur 6 dargestellt. Durch die rasche Stromänderung findet auch eine sehr schnelle Änderung der Spannung u1 statt. Sobald der Anker sich bewegt, findet eine Rückwirkung auf den Spannungsverlauf statt. Nach Ablauf der Abschaltzeit T_{A} zum Zeitpunkt A endet die Bewegung und damit die Rückwirkung der Ankerbewegung auf die Spannung. Die Rückwirkung wird durch den konstanten Ausschaltstrom ermöglicht, der ein Magnetfeld in der Erregerwicklung induziert.

Die zeitliche Ableitung des Ausgangssignals 25 wird in der Differenzierschaltung 27 erzeugt, deren Ausgangssignal 29 ebenfalls in Figur 6 dargestellt ist. Das Ausgangssignal 29 ändert sich, je nach dem ob die Spannung am Ausgang der Messeinrichtung steigt oder fällt. Der jähe Spannungsabfall am Ende der Ankerbewegung wird durch eine Spannungsspitze angezeigt. Das Potential der Spannung ist dabei so hoch, daß ein vorgegebener Schwellwert S überschritten wird.

Bei Überschreiten des Schwellwerts S erscheint am Ausgang 33 des Schwellwertschalters 31 ein Signal, das in Figur 6 ebenfalls dargestellt ist.

Aus Figur 6 ist ebenfalls ersichtlich, daß am Ausgang 33 des Schwellwertschalters 31 auch dann ein Signal erscheint, wenn aufgrund von Störungen, beispielsweise bei Schwankungen der Versorgungsspannung das Signal am Ausgang der Differenzierstufe 27 den Schwellwert S überschreitet. Ein derartiges Signal ist in Figur 6 mit 29a bezeichnet. In diesem Fall erscheint am Ausgang des Schwellwertschalters ein Signal 33a, welches als Bewegungsende des Ankers fehlgedeutet werden könnte. Dies führt zu Unsicherheiten bei der Auswertung der Signale.

Durch die anhand der Figuren 4 und 5 beschriebene Torschaltung werden Fehlersignale ausgefiltert. Der negative Impuls 15', der während der Zeitspanne T₁ vorhanden ist, sowie der positive Impuls 17' während der Zeitspanne T₂ sind in der Figur 6 dargestellt. Durch die Auswertungsschaltung 19, die als UND-Gatter ausgelegt ist, wird das Ausgangssignal 33 des Schwellwertschalters 31 nur in einer Zeitspanne durchgelassen, die kurz vor dem Abschaltzeitpunkt 9 beginnt und kurz danach endet.

Die von den Zeitgebern 15 und 17 der Torschaltung vorgegebenen Zeitspannen T₁ und T₂ können konstant ausgelegt sein. Es ist jedoch auch möglich, diese Zeitspannen in Abhängigkeit von Parametern zu wählen, die die Einschaltzeit T_{E} bzw. die Ausschaltzeit T_{A} beeinflussen. Als Parameter werden Größen gewählt, die für die Funktion der elektromagnetischen Schaltorgans entscheidend sind. Beispielsweise werden die Zeiten T₁ und T₂ in Abhängigkeit von der Spannung der Spannungsquelle 5 oder in Abhängigkeit von dem Wert des durch die Erregerwicklung 3 fließenden Stroms i gewählt.

Dadurch, daß die Erregerwicklung 3 nach dem Einschalten entweder mit einem Einschaltkonstantstrom oder einer Einschaltkonstantspannung beaufschlagt wird, wird ein Magnetfeld induziert, welches durch die Bewegung des Ankers beeinflußt wird. Durch das Magnetfeld findet eine Rückwirkung auf den zeitlichen Verlauf der nicht konstant gehaltenen Größe statt, d.h. im Falle des Einschaltkonstantstroms auf die Spannung U₁, im Fall der Einschaltkonstantspannung auf den Strom i. Änderungen dieser Größe dienen dann der Ermittlung des Endes des Bewegungsablaufs. Ebenso wird beim Abschaltvorgang. durch den Ausschaltkonstantstrom ein Magnetfeld in der Erregerwicklung 3 des elektromagnetischen Schaltorgans induziert, welches durch die Ankerbewegung verändert wird. Die darauf beruhenden zeitlichen Änderungen der Spannung U₁ können dazu herangezogen werden, das Ende der Ankerbewegung zu erfassen.

Nach dem oben Gesagten ergibt sich, daß die Ankerbewegung und insbesondere der Zeitpunkt des Bewegungsendes sowohl bei der Ansteuerung mittels einer Spannung als auch bei der Ansteuerung mittels eines Stroms erfaßt werden kann.

Der Einschalt- bzw. Ausschaltkonstantstrom bzw. die Einschaltkonstantspannung nach Ablauf der Zeit Tₒ angelegt, bis die Einschalt- bzw. Ausschaltzeit abgelaufen ist. Dadurch ist die Überwachung der Ankerbewegung besonders einfach. Einflüsse von Spannungsschwankungen bzw. Stromschwankungen, die fälschlicherweise auf das Ende der Ankerbewegung schließen lassen, werden damit weitgehend ausgeschlossen.

Nach dem Einschaltzeitpunkt können der durch die Erregerrichtung 3 fließende Strom i bzw. die an der Wicklung anliegende Spannung u1 bis zur Einleitung des Ausschaltvorgangs einen beliebigen Verlauf oberhalb des durch den Haltestrom bzw. durch die Haltespannung vorgegebenen Grenzwerts aufweisen. Entsprechend können nach dem Ausschaltzeitpunkt bis zur Einleitung des nächsten Einschaltvorgangs der Strom i bzw. die Spannung u1 einen beliebigen Verlauf unterhalb des durch den Anzugstrom bzw. die Anzugspannung vorgegebenen Grenzwerts aufweisen.

Mit Hilfe des oben beschriebenen Verfahrens bzw. der Vorrichtung kann die Bewegung, insbesondere das Bewegungsende des Ankers beispielsweise eines Magnetventils für die Kraftstoffeinspritzung einer Brennkraftmaschine sehr genau überwacht werden, so daß Einspritzzeitpunkt und Einspritzdauer optimal einstellbar sind.

## Patentansprüche

1. Vorrichtung zur Steuerung eines eine Erregerwicklung (3) und einen bewegbaren Anker ausweisenden elektromagnetischen Schaltorgans (1), das mittels eines steuerbaren Schalters (7) mit einer Spannungsquelle (5) verbindbar ist, mit einer Steuer- und Regeleinrichtung zur Ansteuerung der Erregerwicklung und mit einer Meßeinrichtung (23, 27) zur Erfassung der zeitlichen Änderungen des Stroms oder der Spannung an der Erregerwicklung (3), gekennzeichnet durch ein erstes Zeitglied (13), durch welches der an die Erregerwicklung (3) abgegebene Strom (i) oder die angelegte Spannung (u1) erst nach einer Zeitspanne (Tₒ) nach der Initialisierung eines Schaltvorgangs einer Regelung unterworfen wird.

2. Vorrichtung nach Anspruch 1, gekennzeichnet durch eine Torschaltung (15, 17), die die Auswertung der zeitlichen Strom- oder Spannungsänderungen auf einen Zeitraum begrenzt, der kurz vor dem Ende der Ankerbewegung beginnt und kurz danach endet.

3. Vorrichtung nach einem der Ansprüche 1 oder 2, gekennzeichnet durch einen der Meßeinrichtung (23, 27) zur Erfassung der zeitlichen Änderungen des Stroms oder der Spannung nachgeordneten Schwellwertschalter (31), der so einstellbar ist, daß er auf die bei Beendigung der Ankerbewegung auftretende Strom-/Spannungsänderung anspricht.

4. Vorrichtung nach einem der Ansprüche 1 bis 3, dadurch gekennzeichnet daß das Zeitglied (13) aus einer monostabilen Kippstufe besteht.

5. Vorrichtung nach einem der Ansprüche 1 bis 4, dadurch gekennzeichnet daß die Torschaltung (15, 17) einenn ersten Zeitgeber (15) und einen zweiten Zeitgeber (17) umfaßt, deren Eingangsanschlüsse mit der Steuer- und Regeleinrichtung (4) und deren Ausgangsanschlüsse (Q, Q̅) mit Eingangsanschlüssen eines UND-Gatters (14) verbunden sind.

6. Verfahren zur Steuerung eines eine Erregerwicklung (3) und einen bewegbaren Anker aufweisenden elektromagnetischen Schaltorgans (1), das mittels eines steuerbaren Schalters (7) mit einer Spannungsquelle (5) verbindbar ist, mit einer Steuer- und Regeleinrichtung zur Ansteuerung der Erregerwicklung und mit einer Meßeinrichtung (23, 27) zur Erfassung der zeitlichen Änderungen des Stroms oder der Spannung an der Erregerwicklung, dadurch gekennzeichnet, daß der Strom oder die Spannung zur Erzielung einer raschen Ankerbewegung schnell auf einen hohen Wert angehoben wird, und daß die Absenkung auf den definierten Wert nach einer vorgegebenen Zeit (Tₒ) erfolgt, die kleiner ist als die Zeit (T_{E}), die bis zur Erreichung der betätigten Stellung des Ankers verstreicht.

7. Verfahren nach Anspruch 6, dadurch gekennzeichnet, daß der definierte Wert des Stroms, der Einschaltkonstantstrom, oder daß der definierte Wert der Spannung, die Einschaltkonstantspannung, größer oder gleich gewählt wird als der Anzugsstrom/die Anzugsspannung, der/die zur Bewegung des Ankers in die betätigte Stellung erforderlich ist.

8. Verfahren nach einem der Ansprüche 6 und 7, dadurch gekennzeichnet, daß der Strom oder die Spannung zur Erzielung einer raschen Ankerbewegung schnell auf einen kleinen Wert gesenkt wird, und daß die Anhebung auf den definierten Wert nach einer vorgegebenen Zeit (Tₒ) erfolgt, die kleiner ist als die Zeit (T_{A}), die bis zur Erreichung der nicht betätigten Stellung des Ankers verstreicht.

9. Verfahren nach einem der Ansprüche 6 bis 8, dadurch gekennzeichnet, daß der definierte Wert des Stroms, der Ausschaltkonstantstrom, oder daß der definierte Wert der Spannung, die Ausschaltkonstantspannung, kleiner gewählt wird als der Haltestrom/die Haltespannung, der/die erforderlich ist, den Anker in der betätigten Stellung zu halten.

10. Verfahren nach einem der Ansprüche 6 bis 9, dadurch gekennzeichnet, daß die Zeit (Tₒ) so gewählt wird, daß schon eine Bewegung des Ankers stattfindet, wenn der definierte Wert des Stroms oder der Spannung eingestellt wird.

11. Verfahren nach einem der Ansprüche 6 bis 10, dadurch gekennzeichnet, daß die zeitlichen Änderungen des Stroms oder der Spannung in einem Zeitintervall erfaßt werden, das vor dem Ende der Ankerbewegung beginnt und nach dem Ende der Bewegung endet.

12. Verfahren nach einem der Ansprüche 6 bis 11, dadurch gekennzeichnet, daß Beginn und Ende des Zeitintervalls insbesondere in Abhängigkeit von der Versorgungsspannung des elektromagnetischen Schaltorgans (1) gewählt werden.

13. Verfahren nach einem der Ansprüche 6 bis 12, dadurch gekennzeichnet, daß das Zeitintervall in Abhängigkeit von der Höhe der Spannung der Energieversorgung der Erregerwicklung (3) und/oder von der Höhe des definierten Wertes des Stroms oder der Spannung gewählt wird.

14. Verfahren nach einem der Ansprüche 6 bis 13, dadurch gekennzeichnet, daß Beginn und Ende des Zeitintervalls in Abhängigkeit der Temperatur oder anderer, das Schaltverhalten des elektromagnetischen Schaltorgans (1) beeinflussender Parameter gewählt werden.

15. Verfahren nach einem der Ansprüche 6 bis 14, dadurch gekennzeichnet, daß der definierte Wert wenigstens bis zum Ande der Ankerbewegung in etwa konstant gehalten wird.

## Claims

1. Device for controlling an electromagnetic switching member (1) having an excitation winding (3) and a movable armature and which can be connected by means of a controllable switch (7) to a voltage source (5), having a control and regulation device for driving the excitation winding, and having a measuring device (23, 27) for measuring the temporal variations in the current or in the voltage at the excitation winding (3), characterised by a first timing element (13) by means of which the current (i) delivered at the excitation winding (3), or the applied voltage (u1) is not subjected to regulation until after a period (T_{O}) after the initialisation of a switching operation.

2. Device according to Claim 1, characterised by a gate circuit (15, 17) which limits the evaluation of the temporal current or voltage variations to a period that starts shortly before the termination of the armature movement, and ends shortly thereafter.

3. Device according to one of Claims 1 or 2, characterised by a trigger (31) which is downstream of the measuring device (23, 27) for measuring the temporal variations in the current or voltage, and which can be set such that it responds to the current/voltage variation occurring upon termination of the armature movement.

4. Device according to one of Claims 1 to 3, characterised in that the timing element (13) consists of a monostable element.

5. Device according to one of Claims 1 to 4, characterised in that the gate circuit (15, 17) comprises a first time generator (15) and a second time generator (17) whose input terminals are connected to the control and regulation device (9) and whose output terminals (Q, Q) are connected to input terminals of an AND gate (19).

6. Process for controlling an electromagnetic switching member (1) having an excitation winding (3) and a movable armature and which can be connected by means of a controllable switch (7) to a voltage source (5), having a control and regulation device for driving the excitation winding, and having a measuring device (23, 27) for measuring the temporal variations in the current or in the voltage at the excitation winding, characterised in that in order to achieve a rapid armature movement, the current or the voltage is raised rapidly to a high value, and in that the reduction to the defined value is done after a predetermined time (T_{O}), which is shorter than the time (T_{E}) that elapses up to the actuated position of the armature is reached.

7. Process according to Claim 6, characterised in that the defined value of the current, the constant inrush current, or in that the defined value of the voltage, the constant inrush voltage, is chosen to be greater or equal to the inrush current/the inrush voltage, which current/voltage is necessary to move the armature into the actuated position.

8. Process according to one of Claims 6 and 7, characterised in that in order to achieve a rapid armature movement, the current or the voltage is reduced rapidly to a low value, and in that the raising to the defined value is done after a predetermined time (T_{O}), which is shorter than the time (T_{A}) that elapses up to the non-actuated position of the armature is reached.

9. Process according to one of Claims 6 to 8, characterised in that the defined value of the current, the constant opening current, or in that the defined value of the voltage, the constant opening voltage, is chosen to be smaller than the holding current/ the holding voltage, which current/voltage is necessary to hold the armature in the actuated position.

10. Process according to one of Claims 6 to 9, characterised in that the time (T_{O}) is chosen such that a movement of the armature already takes place when the defined value of the current or of the voltage is set.

11. Process according to one of Claims 6 to 10, characterised in that the temporal variations in the current or the voltage are measured in a time interval that starts before the termination of the armature movement and ends after the termination of the movement.

12. Process according to one of Claims 6 to 11, characterised in that the start and end of the time interval are chosen, in particular, as a function of the supply voltage of the electromagnetic switching member (1).

13. Process according to one of Claims 6 to 12, characterised in that the time interval is chosen as a function of the level of the voltage of the energy supply of the excitation winding (3) and/or as a function of the level of the defined value of the current or the voltage.

14. Process according to one of Claims 6 to 13, characterised in that the start and end of the time interval are chosen as a function of the temperature or of other parameters that influence the switching performance of the electromagnetic switching member (1).

15. Process according to one of Claims 6 to 14, characterised in that the defined value is held approximately constant at least until the termination of the armature movement.

## Revendications

1. Dispositif de commande d'un organe de commutation électromagnétique (1) ayant un enroulement d'excitation (3) et un induit mobile, cet organe étant relié à une source tension (5) par un commutateur commandé (7), avec une installation de commande et de régulation pour commander l'enroulement d'excitation et une installation de mesure (23, 27) pour détecter les variations chronologiques du courant et de la tension dans l'enroulement d'excitation (3), caractérisé par une première horloge (13) qui soumet le courant (i) fourni à l'enroulement d'excitation (3) ou la tension (u1) appliquée à cet enroulement, seulement après une période (T_{O}) suivant l'initialisation d'une opération de commutation d'une installation de régulation.

2. Dispositif selon la revendication 1, caractérisé par une porte (15, 17) qui limite l'exploitation des variations du courant ou de la tension dans le temps à une fenêtre de temps qui commence peu avant la fin du mouvement de l'induit et se termine peu après la fin de ce mouvement.

3. Dispositif selon l'une des revendications 1 ou 2, caractérisé par un commutateur à seuil (31) prévu après l'installation de mesure (23, 27) pour détecter les variations dans le temps du courant ou de la tension, ce commutateur étant réglé pour être sollicité par la variation de courant/tension qui se produit à la fin du mouvement de l'induit.

4. Dispositif selon l'une des revendications 1 à 3, caractérisé en ce que l'horloge (13) est une bascule monostable.

5. Dispositif selon l'une des revendications 1 à 4, caractérisé en ce que la porte (15, 17) comprend une première horloge (15) et une seconde horloge (17) dont les bornes d'entrée sont reliées à l'installation de commande et de régulation (9) et dont les bornes de sortie (Q, Q̅) sont reliées aux bornes d'entrée d'une porte ET 19.

6. Procédé de commande d'un organe de commutation électromagnétique (1) ayant un enroulement d'excitation (3) et un induit mobile, cet organe pouvant être relié par un commutateur commandé (7) à une source de tension (5), avec une installation de commande et de régulation pour commander l'enroulement d'excitation et une installation de mesure (23, 27) pour détecter les variations dans le temps du courant ou de la tension dans l'enroulement d'excitation, caractérisé en ce qu'on augmente rapidement à une valeur élevée le courant ou la tension pour obtenir un mouvement rapide de l'induit et en ce qu'on abaisse cette valeur à une valeur déterminée après un temps prédéterminé (T_{O}) qui est inférieur au temps (T_{E}) qui s'écoule jusqu'à ce que l'on atteigne la position de manoeuvre de l'induit.

7. Procédé selon la revendication 6, caractérisé en ce que la valeur déterminée du courant, celle du courant constant de branchement ou la valeur déterminée de la tension, celle de la tension de constante de branchement, est choisie supérieure ou égale au courant d'attraction/tension d'attraction, nécessaire pour déplacer l'induit dans la position de manoeuvre.

8. Procédé selon l'une des revendications 6 et 7, caractérisé en ce que le courant ou la tension pour obtenir un mouvement rapide de l'induit est rapidement diminué à une faible valeur et en ce que le relèvement à une valeur déterminée se fait après un temps prédéterminé (T_{O}) inférieur au temps (T_{A}) qui s'écoule jusqu'à ce que l'on atteigne la position de non manoeuvre de l'induit.

9. Procédé selon l'une des revendications 6 à 8, caractérisé en ce que la valeur déterminée du courant, du courant constant de coupure ou celle de la tension ou tension constante de coupure, est choisie inférieure à la valeur du courant/tension de maintien nécessaire pour maintenir l'induit dans la position de manoeuvre.

10. Procédé selon l'une des revendications 6 à 9, caractérisé en ce qu'on choisit le temps (T_{O}) pour qu'il y ait déjà un mouvement de l'induit lorsque la valeur définie du courant ou de la tension est réglée.

11. Procédé selon l'une des revendications 6 à 10, caractérisé en ce qu'on détecte les variations dans le temps du courant ou de la tension dans un intervalle de temps qui commence avant la fin du mouvement de l'induit et se termine après la fin de ce mouvement.

12. Procédé selon l'une des revendications 6 à 11, caractérisé en ce que le début et la fin de l'intervalle de temps sont choisis notamment en fonction de la tension d'alimentation de l'organe électromagnétique de commutation (1).

13. Procédé selon l'une des revendications 6 à 12, caractérisé en ce qu'on choisit l'intervalle de temps en fonction de l'amplitude de la tension d'alimentation de l'enroulement d'excitation (3) et/ou de l'amplitude de la valeur déterminée du courant ou de la tension.

14. Procédé selon l'une des revendications 6 à 13, caractérisé en ce qu'on choisit le début et la fin de l'intervalle de temps en fonction de la température ou d'autres paramètres influençant le comportement en commutation de l'organe électromagnétique de commutation (1).

15. Procédé selon l'une des revendications 6 à 14, caractérisé en ce qu'on tient sensiblement constante la valeur déterminée au moins jusqu'à la fin du mouvement de l'induit.
